# EUROPEAN PATENT APPLICATION

(11) **EP 2 275 686 A1**
(43) Date of publication of application: **19.01.2011**
(21) Application number: 09009105.9
(22) Date of filing: 13.07.2009
(51) Int. Cl.: F04D 17/12, F04D 25/06, F04D 29/058, F16C 17/20, F16C 39/02, F16C 39/06, H02K 7/08, F01D 21/04, F01D 25/16

(54) **Turbocompressor assembly**

(71) Applicant: Siemens Aktiengesellschaft, 80333 München (DE)
(72) Inventor: Nijhuis, Theo, 7595 PG Weerselo (NL)

(57) **Abstract**

A turbocompressor assembly comprising a gas tight casing enclosing a rotor, a motor and a compressor arranged at a common shaft along a rotor axis, the rotor being disposed by a first bearing at a first axial end section of the shaft and a second bearing at a second axial end section of the shaft, **characterized in that** a retainer bearing is placed between the motor and the compressor such that the rotor is circumferentially enclosed by the retainer bearing to support the rotor is disclosed. The retainer bearing is fastened to the turbocompressor assembly using a fixing means to prevent relative movement of the retainer bearing with respect to the bending rotor. The retainer bearing is placed in a clamping device which carries away the loadings exerted by the bending rotor to the casing through the wedges, thereby preventing damage of rotor during emergency rundown.

## Description

The present invention relates to a turbocompressor assembly according to the preamble of claim 1.

A turbocompressor assembly generally comprises a single gas-tight casing, which is encloses a rotor, a motor and a compressor. The rotor is supported by bearing arrangements at the axial end sections of the rotor shaft. Generally, in case of a large size motor and/or a multi-stage compressor, rotor dynamic problems may arise as the rotor span between the two bearings becomes long and also the rotor becomes heavy which may lead to bending of rotor.

The additional load generated by bending rotor would endanger essential parts such as the motor, the compressor, bearings or other machine installations. Conventionally, many retainer arrangements have been introduced adjacent to the magnetic bearings at the end sections of the rotor shaft to prevent extreme bending of the rotor during emergency breakdown. However, these arrangements exhibit potential drawbacks.

The retainer arrangements used in current turbocompressor are not strong enough to resist the forces exerted on it by the blades of the bending rotor. Also, such arrangements necessitate multiple components requiring a relatively large amount of machining. In addition to the high cost associated with manufacture and assembling of such machining, the arrangement increases the complexity of the assembly. Further, it increases the maintainability requirements such as periodic inspection and replacement associated with such parts. Moreover, different set of components are required for the rotor bending in clockwise direction and anticlockwise direction.

The object of the invention is to increase the stability of the rotor which is supported by bearings at its end section during a run down in case of failure of the bearings.

These problems are solved by a turbocompressor assembly according to claim 1.

By placing a retainer bearing in a radial direction between the motor and compressor of the turbocompressor assembly, the retainer bearing acts as an additional supporting means for the rotor which prevents displacement of the rotor from its axis of rotation in case of a bending-in operation, for example during an emergency rundown.

According to preferred embodiment herein, the bearings at the axial end sections are active magnetic bearings (AMB). The AMBs support moving machinery without physical contact, for example, they can levitate a rotating shaft and permit relative motion without friction or wear.

According to an embodiment herein, the assembly further comprises a fixing means such as an anti-rotation key for fastening the retainer bearing to the casing to prevent movement of the retainer bearing in circumferential direction during emergency rundown of the rotor. This secures the retainer bearing in position to reduce the backward whirl and other chaotic displacements of the rotor at extreme load conditions.

According to another preferred embodiment, the retainer bearing can be constructed in the form of an annular ring. Thereby, allowing a compact construction and hence cutting down the space requirements within the assembly.

According to another preferred embodiment, the retainer bearing is placed in a clamping device. This acts as a supporting device for the retainer bearing to bear the loads exerted during emergency rundown.

In another preferred embodiment herein, the clamping device is attached to the casing using wedges to carry loads induced during emergency run down of the rotor. Thereby, preventing damage of the rotor and related machineries during emergency run down.

According to another preferred embodiment, the clamping device is placed circumferential to the retainer bearing at intervals for fastening the retainer bearing to the casing, thereby creating spacing between the retainer bearing and the casing. This space forms a channel within the assembly for the passage of a cooling fluid to carry away the heat out of the casing to maintain the desirable operating temperature of the machinery.

According to yet another preferred embodiment, the retainer bearing includes at least one surface, wherein at least one surface facing the rotor shaft is a low-friction surface and a high-temperature conducting surface. The low friction surface reduces the radial contact caused by the bending of the rotor which in turn avoids the backward whirl of the rotor. The high-temperature conducting surface protects the machinery from damage due to the excess heat generated during the operation.

According to yet another preferred embodiment, retainer bearing frictionally engages with the rotor to limit radial displacement of the rotor during emergency rundown. This potentially limits the damage of the internal components of the assembly which generally occur at extreme loadings.

According to yet another preferred embodiment, the retainer bearing can be made from at least one of a ceramic and plastic material. This material can withstand the high forces and heats generated during machine operation and are also corrosion resistant.

The present invention is further described hereinafter with reference to illustrated embodiments shown in the accompanying drawings, in which:
- FIG 1: illustrates a cross-sectional view of a turbocompressor assembly depicting a retainer bearing for limiting bending of rotor during emergency rundown, according to an embodiment herein;
- FIG 2: illustrates a cross-sectional view of a retainer bearing of FIG.1, according to an embodiment herein; and
- FIG 3: illustrates a close up view of a part of FIG.1, showing a retainer bearing and its method of location in the turbocompressor assembly according to an embodiment herein.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

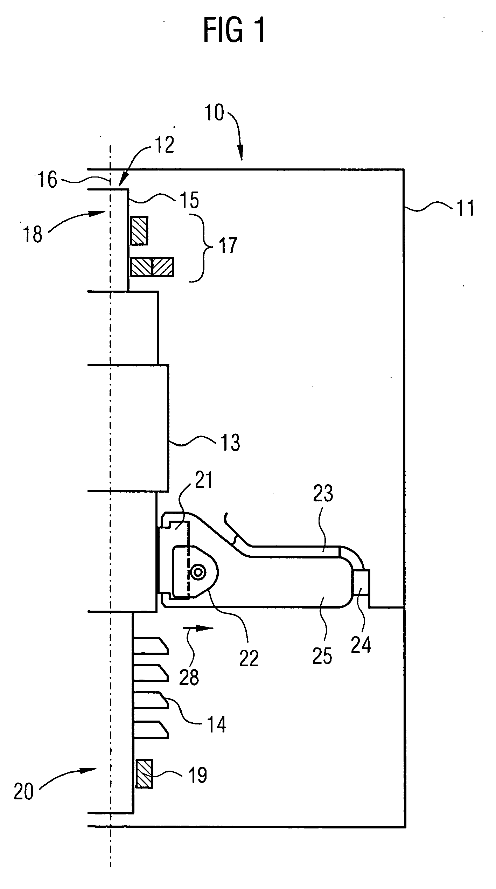

FIG 1 illustrates a cross-sectional view of a turbocompressor assembly 10 depicting a retainer bearing 21 for limiting bending of rotor 12 during emergency rundown according to an embodiment herein. The turbocompressor assembly 10 includes an outer gas-tight casing 11 enclosing a rotor 12 having a shaft 15 causing the rotation of the rotor 12 about an axis 16, a motor 13 and a compressor 14. The rotor 12 is disposed by a first bearing 17 at a first axial end section 18 of the shaft 15 and a second bearing 19 at a second axial end section 20 of the shaft 15. The retainer bearing 21 is placed between the motor 13 and the compressor 14 in the assembly 10 for supporting the rotor 12 in case of an emergency rundown of the rotor 12. The retainer bearing 21 can be at least one of an annular ring like element with limited radial clearance. Generally, during emergency rundown loading on the supporting frame of the rotor 12 increases. This causes bending of the rotor 12 in a direction as indicated by the upward arrow 28 in FIG. 1, which may cause potential damage of the related machine parts. The arrow 28 corresponds to the radial direction of the rotor 12 within the turbocompressor assembly 10. The retainer bearing 21 then functions as a supporting means for limiting the bending of the rotor 12. The retainer bearing 21 frictionally engages with the rotor 11 to avoid the radial contact and also limits the movements of the rotor 11 to an acceptable magnitude to limit radial displacement of the rotor 12 during emergency run down. This avoids potential damage of the rotor 11 and related parts.

The retainer bearing 21 is fastened to the casing 11 using a fixing means 22 such as an anti-rotation key. The fixing means 22 prevents circumferential movement of the retainer bearing 21 relative to the rotor 12 during operation. The fixing means 22 secures the retainer bearing 21 to the casing 11 to prevent the backward movement of the retainer bearing 21 relative to the torque exerted by the bending rotor 12. The retainer bearing 21 is placed in clamping device 23 such as a holder to carry the loadings on the support by the bending rotor 12, thereby preventing damage of the rotor 12. One end of the clamping device 23 holds the retainer bearing 21 and the other end is attached to the casing 11 through wedges 24. The clamping device 23 provides support to the retainer bearing 21 to conduct the radial and tangential loads induced by the bending rotor 12. The clamping device 23 carries the loadings to the casing 11 of the assembly 10 through the wedges 24 without damaging the rotor 12. The loadings can be the torque exerted by the bending rotor 12 or the force exerted due to internal thermal expansion. The retainer bearing 21 can be made from plastic, ceramic, or any other material having sufficient strength to withstand the high forces generated by the rotor 12 and the heat generated within the assembly 10 during operation.

The clamping devices 23 for retainer bearing 21 are kept circumferentially at different equally spaced locations in the casing 11. These clamping devices 23 are attached to the casing 11 to provide support for the retainer bearing 21. The arrangement of clamping devices 23 creates spacing between the retainer bearing 21 and the casing 11. This space form a channel 25 for admitting or discharging a fluid such as a cooled air or a liquid to carry away the excess heat generated during the operation of the assembly 10.

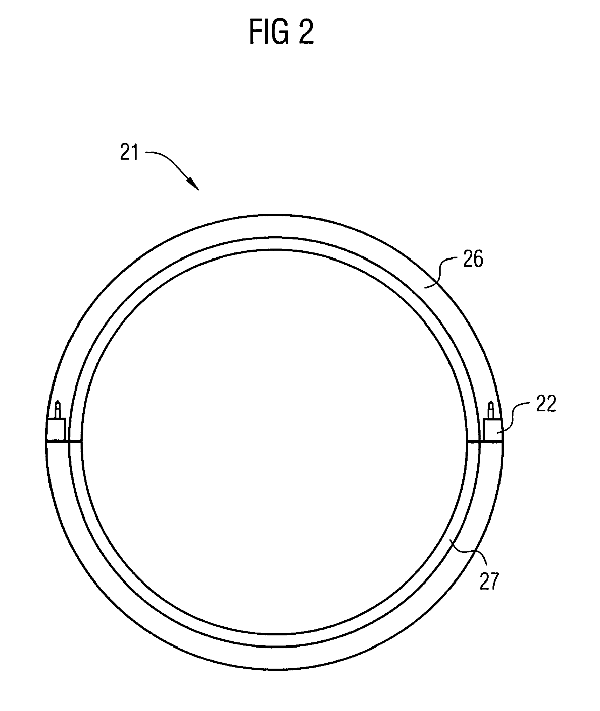

FIG 2 illustrates a cross-sectional view of a retainer bearing 21 of FIG.1, according to an embodiment herein. The retainer bearing 21 is an annular ring placed in between the motor 13 and compressor 14 of a turbocompressor assembly 10. The retainer bearing 21 includes two surfaces, an outer surface 26 with high heat conductivity and an inner surface 27 which is of low friction. The retainer bearing 21 is generally positioned in the assembly 10 in such a way that the inner low friction surface 27 is in contact with the rotor 12. The retainer bearing 13 is placed in clamping device 23 (see FIG.1) to carry the loadings on the support by the bending rotor 12, thereby preventing damage of the rotor 12. The radial-stop element 21 is secured to the casing 11 using an axially extending fixing means 22 such as an anti-rotation key, which is disposed in a casing key slot (not shown) for preventing circumferential rotation of the retainer bearing 21 relative to the bending rotor 12. The retainer bearing 21 can be made of a ceramic material, plastic material or any material capable of withstanding high temperature, say greater than 1000°C.

The retainer bearing 21 can be integrally joined to the casing 11 of the assembly 10 as either a separately produced component which may suitably joined thereto by welding for example, or may be integrally formed and machined with the casing 11 during the manufacturing process.

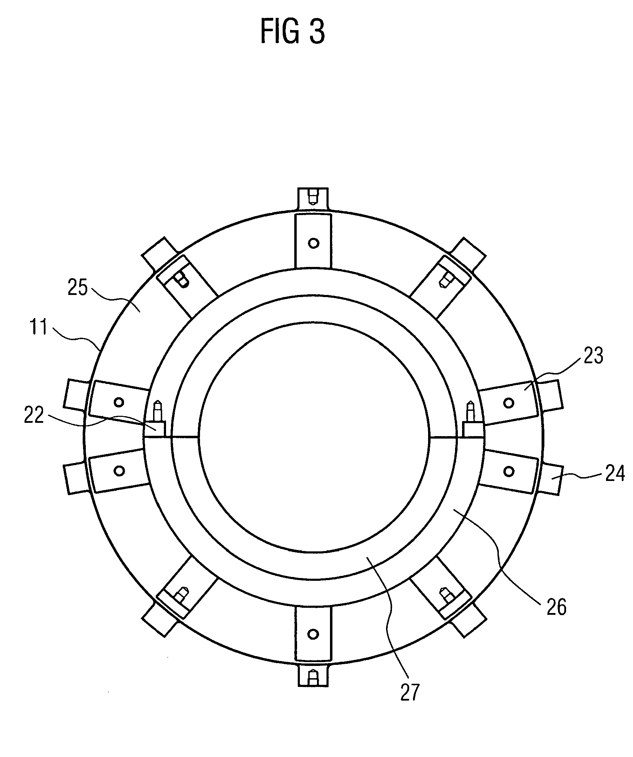

FIG 3 illustrates a close up view of a part of FIG. 1, showing a retainer bearing 21 and its method of location in the turbocompressor assembly 10 according to an embodiment herein. The figure depicts a cross-sectional top view of the retainer bearing 21 being placed in position using a plurality of clamping devices 23 as compared to FIG. 1. The retainer bearing 21 is placed between the rotor 12 and casing 11 of the assembly 10. The retainer bearing 21 is positioned in a clamping device 23 such as a holder. The holder is arranged in a way to hold the retainer bearing 21 at one end and the other end is attached to casing 11 through the wedges 24. Further, the retainer bearing 21 is secured using a fixing means 22 to prevent relative movement of the retainer bearing 21 during turbocompressor 10 operation. The fixing means 22 can be an anti-rotation key. During the operation of the assembly or during an emergency breakdown, relative circumferential or rotational movement between the rotor 12 and the retainer bearing 21 is prevented by the anti-rotation key. The fixing means 22 resists the rotational torques to which the ring is subjected during the operation of the assembly as well as to the axial loads. The forces imposed on the retainer bearing 21 are easily dissipated by the low frictional surface of the retainer bearing 21 thus preventing it from breakage. The arrangement enables to carry the radial and tangential loads induced by the bending rotor 12 on the support for rotor 12. The loadings are carried away to the casing 11 through the wedges 24 and thus prevent the backward whirl of the rotor 12 during emergency run down.

The holders are arranged at distinct intervals to support the retainer bearing 21. The space thus created due to distinct spacing forms a channel 25 within the assembly 10 for passage of a fluid. The fluid is continuously pumped into the plenum during assembly operation. Here, the channel 25 formed by the clamping devices 23 spaced at distinct intervals apart carries away the heated up air and thus maintain operating temperature within the turbocompressor assembly 10.

In the embodiments disclosed herein, the retainer bearing reduces the loading on the supporting frame of the rotor during emergency run-down on the active magnetic bearings at the end section. The retainer bearing herein is a simple ring with limited radial clearance and low friction surface. This helps to make construction of the assembly less heavy, which in turn reduce the time and cost as less machinery is involved. Further, the above described radial stop mechanism is cost effective and highly reliable. The arrangement of the retainer bearing enables the differential torque generated by the bending rotor during emergency rundown to be frictionally transferred to the casing through the wedges. As a result, the retainer bearing facilitates extending a useful life of the engine assembly in a cost effective and reliable manner.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A turbocompressor assembly (10) comprising a gas tight casing (11) enclosing a rotor (12), a motor (13) and a compressor (14) arranged at a common shaft (15) along a rotor axis (16), said rotor (12) being disposed by a first bearing (17) at a first axial end section (18) of said shaft (15) and a second bearing (19) at a second axial end section (20) of said shaft (15), **characterized in that** a retainer bearing (21) is placed between said motor (13) and said compressor (14) such that said rotor (12) is circumferentially enclosed by said retainer bearing (21) to support said rotor (12).

2. The turbocompressor assembly (10) according to claim 1, wherein said bearings (17, 19) at said axial end sections (18, 20) are active magnetic bearings.

3. The turbocompressor assembly (10) according to claim 1, wherein said retainer bearing (21) is an annular ring.

4. The turbocompressor assembly (10) according to claim 1, further comprising a fixing means (22) for fastening said retainer bearing (21) to the casing (11) to prevent movement of said retainer bearing (21) in circumferential direction during emergency rundown of said rotor (12).

5. The turbocompressor assembly (10) according to claim 4, wherein said fixing means (22) is an anti-rotation key.

6. The turbocompressor assembly (10) according to one of the claims 1 to 5, wherein said retainer bearing (21) is placed in a clamping device (23).

7. The turbocompressor assembly (10) according to claim 6, wherein said clamping device (23) provides support to said retainer bearing (21) to conduct loading induced by said rotor (12) to casing (11) of said turbocompressor assembly (10) during emergency rundown.

8. The turbocompressor assembly (10)according to claim 6 or 7, wherein said clamping device (23) is attached to said casing (11) to carry loads induced by said rotor (11) during emergency run down.

9. The turbocompressor assembly (10) according to one of the claims 6 to 8, wherein said clamping device (23) is connected to said casing (11) through wedges (24).

10. The turbocompressor assembly (10)according to one of the claims 6 to 9, wherein said clamping device (23) is placed circumferential to said retainer bearing (21) at intervals or fastening said retainer bearing (21) to said casing (11), thereby creating spacing between said retainer bearing (21) and said casing (11).

11. The turbocompressor assembly (10) according to claim 10, wherein spacing between said retainer bearing (21) and said casing (11) forms a channel (25) for passage of fluid.

12. The turbocompressor assembly (10) according to one of the claims 1 to 11, wherein said retainer bearing (21) includes at least one surface, wherein said at least one surface facing said rotor (12) is a low-friction surface and a high-temperature conducting surface.

13. The turbocompressor assembly (10)according to claim 1 to 12, wherein said retainer bearing (21) frictionally engages with said rotor (12) to limit radial displacement of said rotor (12) during emergency run down.

14. The turbocompressor assembly (10) according to any of the claims 1 to 13, wherein said radial retainer bearing (21) is made from at least one of a ceramic and plastic material.
